# EUROPEAN PATENT APPLICATION

(11) **EP 4 620 981 A1**
(43) Date of publication of application: **24.09.2025**
(21) Application number: 24382310.1
(22) Date of filing: 21.03.2024
(51) Int. Cl.: C08B 15/00, C08L 1/08

(54) **PROCEDURE FOR THE FUNCTIONALIZATION OF CELLULOSE, FUNCTIONALIZED CELLULOSE THUS OBTAINED AND USE THEREOF**

(71) Applicant: Institut Catalá D´Investigació Química (ICIQ), 43007 Tarragona (ES); Institució Catalana De Recerca I Estudis Avançats (ICREA), 08010 Barcelona (ES); Universität Potsdam, 14469 Potsdam (DE)
(72) Inventor: Kleij, Arjan W., Barcelona (ES); Skoulas, Dimitrios, Tarragona (ES); Bravo Lara, Fernando, Tarragona (ES); Schlaad, Helmut, Potsdam (DE)
(74) Representative: Pons IP

(57) **Abstract**

A procedure for the preparation of conjugates between poly(limonene carbonate) (PLC) and cellulose was described. This method allows the attachment of polyesters on the cellulose, which makes the final conjugate a high versatile and eco-friendly medium for the manufacture of new materials. In this respect, the olefin groups of the attached PLC were utilized for their crosslinking with the support of crosslinkers like dithiols. A further example of the adaptability of the functionalized cellulose with PLC was its incorporation into a commercially available matrix like divinylbenzene (DVB) in order to produce composite materials.

## Description

The invention relates to a procedure for the preparation of a conjugate between poly(limonene carbonate) (PLC) and cellulose, which is a high versatile and eco-friendly medium for the manufacture of new materials, such a rubber-type materials and bio-based plastics. The present invention also refers to this conjugate (i.e: PLC-functionalized cellulose) and their use in the preparation of crosslinking materials and bio-based plastics.

### BACKGROUND ART

The availability of plastics for everyday consumption with improved properties is a major challenge of today's society. Given the drawbacks of the petroleum-based plastics, namely the pollution of environment and the exhaustion of fossil resources, it is of high importance that these are replaced by more environmentally friendly products without compromises in terms of properties and applications. In this respect, the increase of biomass based raw materials can be exploited as a source for highlighting alternative solutions.

A typical example of this strategy is the utilization of poly(limonene carbonate) (PLC) deriving from limonene. Limonene is an unsaturated hydrocarbon terpene with a pendant double bond, which can be extracted from biomass waste, for instance orange peel (Hauenstein, O. et al. Nature Communications 2016, 7*)*. Catalytic ring-opening polymerization (ROP) is the main method for the synthesis of PLC using the metal-catalyzed conversion of limonene's oxidation product, namely limonene oxide (Poland, S. J. et al. Green Chemistry 2017, 19 (21), 4990-5011; Schneiderman, D. K. et al. Macromolecules 2017, 50 (10), 3733-3749). This route incorporates the greenhouse effect gas CO₂ and avoids the use of toxic reagents. Due to the sterically demanding nature of terpene oxide monomers, the use of the proper catalytic system plays a crucial role for the activation of the precursors. Coates et al. reported zinc catalysts for the copolymerization of terpene-based epoxides and CO₂, yielding fully bio-based polycarbonates (Byrne, C. M. et al. Journal of the American Chemical Society 2004, 126 (37), 11404-11405). A step forward was the presentation of powerful M(aminotriphenolate) complexes (M = Al, Fe, Co) that can be used as versatile and modular catalyst components for a wide variety of transformations. Especially, the Al (III)-based catalyst is effective for the polymerization not only of the trans but also the cis-isomer of limonene oxide, which results to higher conversions.

Another example of a synthetical polyester that is originated from renewable sources is poly(lactic acid) (PLA). Lactic acid can be produced by corn or sugar cane and then it is polymerized with polycondensation and/or ring-opening polymerization¹³. PLA is labelled as a bio sourced and biodegradable polymer, since the ester bond of the backbone chains can be hydrolyzed. The thermal, mechanical and biological properties of PLA render it as a highly intrigued material with a wide range of applications, such as 3D printing and drug tissue engineering.

A further advantage of these polymers is their potential to be used for the formulation of composite materials, which are the outcome of the combination of other materials resulting in the improvement of their physicochemical characteristics. Moreover, the assembly of petroleum and plant-based materials is a new research highlight, since it serves the goal for "greener" composites for a plethora of applications. Polymer composite materials consist mainly of two parts: the matrix, which can be categorized in thermoplastic and thermosetting matrices and the reinforcement material. Fiber loading can reinforce the final structure integrating chemically or physically in a matrix, which can distribute the reinforcing constraints. Especially the fibers that have a plant origin like hemp, jute, sisal, kenaf or banana attract the scientific interest. Among them, composite materials with cellulose fibers have been studied extensively in literature. Cellulose is a polysaccharide consisting of glucose units bonded by β 1-4 glycosidic bonds and its resource in nature is enormous, due to the fact that it can be found in plant walls (Uusi-Tarkka, E. K. et al. Applied Sciences (Switzerland) 2021, 11 (21)). Gao et al presented the preparation of composites of PLA reinforced with cellulose-graft-Poly-(ε-caprolactone) copolymer, which adopts the role of the plasticizer. ZengHui Dai prepared fully biobased composites reinforced by cotton fabrics after polymerizing a bioderived unsaturated polyester dimethyl itaconate (Dai, Z. et al. ACS Sustainable Chemistry and Engineering 2018, 6 (11), 15056-15063). In all of these examples there is a lack of covalent bonding between the cellulose and the polymers. Moreover, it has been reported the "grafting from" approach based on the esterification of cellulose's hydroxyl groups (Genovese, M. E. et al. ACS Sustainable Chemistry and Engineering 2022, 10 (29), 9401-9410). According to this method, the hydroxyl groups serve as initiation points for the polymerization of L-lactide through compression molding. However, only oligomers of PLA can be grafted on cellulose's surface. In an effort to prepare homogeneous cellulose esters, Yang et al. prepared a method involving the reaction of cellulose pulp with CO₂ in the presence of 1,8-diazabicyclo[5.4.0]undec-7-ene (DBU) (Yang, Y. et al. Green Chemistry 2015, 17 (5), 2758-2763). Furthermore, Meier et al. published their findings about the synthesis of fatty acid cellulose esters utilizing the same procedure (Esen, E. et al. Biomacromolecules 2021, 22 (2), 586-593). In all of these examples, it is pivotal the utilization of CO₂ for the completion of the reactions. Also, no polymer can be attached on the cellulose, confining the possibility for post-modification and/or functionality.

In view of the above, the present invention provides a procedure to obtain a new material based on cellulose functionalized with a polymer. Said functionalized cellulose consists of a promising feedstock that opens avenues for the introduction of novel materials with improved properties in applications, like sealants. Said new materials represent an alternative to the use of petroleum-based plastics.

### DESCRIPTION OF THE INVENTION

The inventors have developed a novel method for the functionalization of cellulose with the bio-based polymer poly(limonene carbonate) (PLC). The functionalization of the cellulose takes place using 1,5,7-Triazabicyclo[4.4.0]dec-5-ene (TBD) as a catalyst, thus obtaining conjugates of PLC and cellulose. Then, the olefin groups of the attached PLC were utilized for their crosslinking with the support of crosslinkers like dithiols. The produced rubber like materials showed improved viscoelastic properties and they were tested for their thermal and rheological properties. A further example of the adaptability of the functionalized cellulose with PLC, was its incorporation into a commercially available matrix like divinylbenzene (DVB) in order to produce composite materials. The latter showed improved thermomechanical properties in comparison with the crosslinked DVB without conjugates, as it became stiffer after the integration of the conjugates. Except from that, it allows the reduce of the use of petroleum-based matrices, like DVB, since a large part of the final material mass was replaced with the presented conjugates.

Then, a first aspect of the present invention relates to a procedure for the functionalization of cellulose with poly(limonene carbonate) (PLC), wherein the method comprises contacting cellulose with PLC in a solvent in presence or 1,5,7-Triazabicyclo[4.4.0]dec-5-ene (TBD) as a catalyst and at a temperature between 80 and 120ºC.

Cellulose avails a number of hydroxyl groups that can react with the -O(C=O)O- of PLC catalysed by TBD. In this respect, the functionalization of cellulose with PLC is based on the covalent binding of PLC to cellulose.

In a preferred embodiment, the solvent used in the procedure is dimethyl sulfoxide (DMSO).

In a preferred embodiment, the procedure is carried out at a temperature of 120 ºC.

In a preferred embodiment, the procedure is carried out for 3 to 5 hours, preferably, 4 hours.

In a preferred embodiment, the proportion by weight PLC:cellulose is between 10:0.5 and 10:1.5, more preferably, it is 10:1.1.("weight" and "mass" are used interchangeably in the present invention).

In a preferred embodiment, the proportion of catalyst is between 0.10 and 0.30 g, more preferably 0.22 g, for every 10 g of PLC used.

In a preferred embodiment, the cellulose used in the procedure is microcrystalline cellulose (Microcrystalline cellulose is commercially available).

The resulting product (cellulose functionalized with PLC, also referred as "conjugate" or "PLC-functionalized cellulose") is obtained as a solid that is recovered from the reaction media. Preferably, said solid is dried at a temperature between 40 and 60 ºC for 1 to 5 h and the, it is preferably treated with tetrahydrofuran (THF) in order to solubilize the unreacted PLC.

The product obtained in the reaction, whether dried and treated with THF or not, is preferably recovered by centrifugation.

The product dried and treated with THF can be further treated at 100-130 °C for 10-14 h.

A second aspect of the present invention refers to a material obtainable by the procedure described in the first aspect of the invention, wherein said material comprises or consists of the cellulose functionalized with PLC ("conjugate" or "PLC-functionalized cellulose"). The functionalization of cellulose with PLC is based on the covalent binding of PLC to cellulose.

In a preferred embodiment, the content of PLC in said material is between 20 and 30 % by weight of PLC, more preferably 25% by weight, as measured by thermogravimetric analysis (TGA) (The ratio of PLC:cellulose in the preparation reaction is preferably 10:1.1 In this case, after the analysis of the final obtained conjugate, it was found that the conjugate has a proportion of weight cellulose:PLC 75:25).

The cellulose functionalized with poly(limonene carbonate) can be used as starting material for the preparation of bio-based plastics or rubber like materials.

The term "bio-based plastic" refers to a plastic material derived from renewable sources, and its purpose is to substitute the petroleum-based plastics.

The term "rubber-like" materials refers to elastomeric type products.

Another aspect of the present invention refers to a crosslinking process (for crosslinking the conjugate obtained in the procedure described in the first aspect of the invention) for the obtention of a rubber-like material, wherein said process comprises contacting the conjugate with ethane-1,2-dithiol as a crosslinker, in presence of a radical initiator at a temperature between 60 and 90ºC.

In a preferred embodiment, the radical initiator used in the crosslinking proceed is 2,2'-azobis(isobutyronitrile) (AIBN). Preferably, the amount of radical initiator used is between 0.005 and 0.015 g, more preferably 0.011 g, per 1g of conjugate.

In a preferred embodiment, the amount or ethane-1,2-dithiol used is between 0.0140g and 0.0160 g, more preferably 0.0153 g per 1g of conjugate.

In a preferred embodiment, the crosslinking process is carried out in the solvent tetrahydrofuran (THF).

Preferably, the crosslinking process is carried out at a temperature of 70ºC.

Preferably, the crosslinking process is carried out at for 10 to 15 h, more preferably, for 12 h.

Another aspect of the invention relates to the crosslinked material obtained in the above-defined crosslinking process. Said material comprises or consist of cellulose functionalized with PLC crosslinked with ethane-1,2-dithiol.

This crosslinked material has rubber-like properties, and it could be used, for example, as an additive to a foam material. The main property is the elastic response measured by rheology. The material showed storage modulus (G') higher than loss modulus (G") for an extensive window of strain values tested.

Another aspect of the present invention refers to a method to obtain a divinylbenzene (DVB) based composite material, said method comprises contacting the conjugate obtained in the procedure described in the first aspect of the invention with DVB in presence of phenylbis(2,4,6-trimethylbenzoyl) phosphineoxide (BAPO) and under light radiation between 365 and 460 nm, preferably, 405 nm.

Preferably, the reaction time to obtain de composite is between 10 and 50 min, preferably 20 min.

In a preferred embodiment, the weight ratio DVB/conjugate is between 90/10 and 70/30, more preferably 80/20.

In a preferred embodiment, the amount of BAPO used is between 0.5 and 1.5 weight %, more preferably 1 weight %, with respect to the total weight of the mixture DVB/conjugate.

Another aspect of the present invention relates to the composite material obtained by the above-described method to obtain a DVB based composite material. Said composite comprises or consist of PLC-functionalized cellulose crosslinked with the DVB matrix after radical random polymerization initiated by BAPO. The polymerization is initiated after irritation by light and the final material can be placed in a mould. Based on the shape of the mould, the above-mentioned mixture of DVB, BAPO and the PLC functionalized cellulose can obtain the shape of the mould rendering the form of the final bioplastic after polymerization.

A final aspect of the present invention relates to the use of said composite material as a sealant, for example, as a sealant for corresponding fastening applications.

The functionalization of cellulose with PLC offers the possibility to the conjugate to be bound covalently with the matrix, namely DVB. The final bioplastic consists of 20% bio-based material (cellulose and PLC, which is derived from biomass of orange peels). In comparison with the respective plastic material consisting 100% from DVB, the presented material shows improved mechanical, viscoelastic and thermal properties. These improvements are attributed to the integration of the conjugated to the DVB matrix. Additionally, the presented material has hydrophobic properties, can adopt different forms based on the shape of the moulds and the whole procedure is fast (15 minutes).

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

### DESCRIPTION OF THE FIGURES

Fig. 1: Infrared (IR) analysis of the product obtained during functionalization of cellulose with PLC at 120ºC.
Fig. 2: Gel permeation chromatography (GPC) analysis of the free PLC fragments produced during the functionalization of cellulose with PLC at 120 ºC.
Fig. 3: Thermogravimetric (TGA) analysis of products formed by the functionalization of cellulose with PLC at 120°C.
Fig. 4: Graph of 1^{st} order derivative of the TGA data shown in Figure 3.

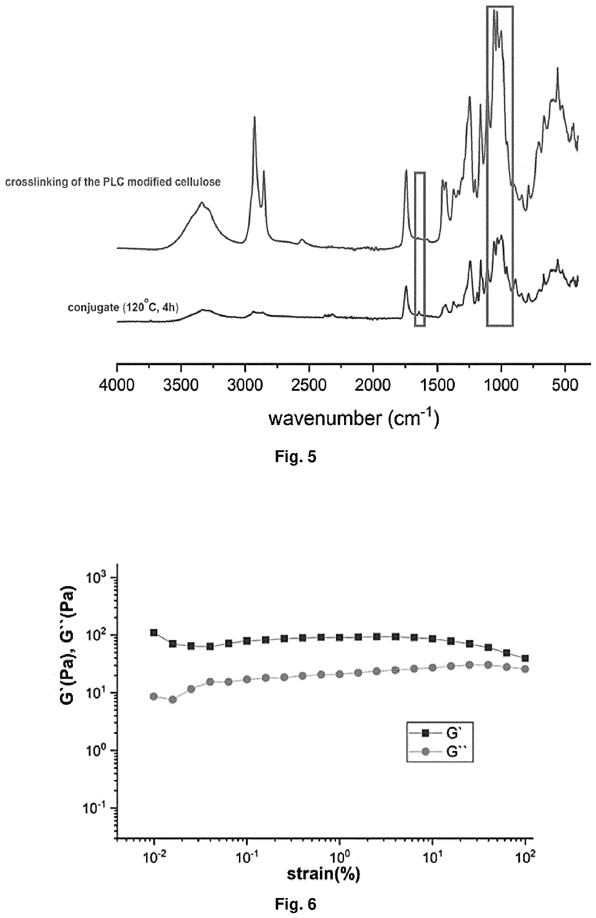

Fig. 5: IR analysis of the crosslinking of PLC-modified cellulose.
Fig. 6: Dynamic strain sweep measurement of the crosslinked PLC-modified cellulose.

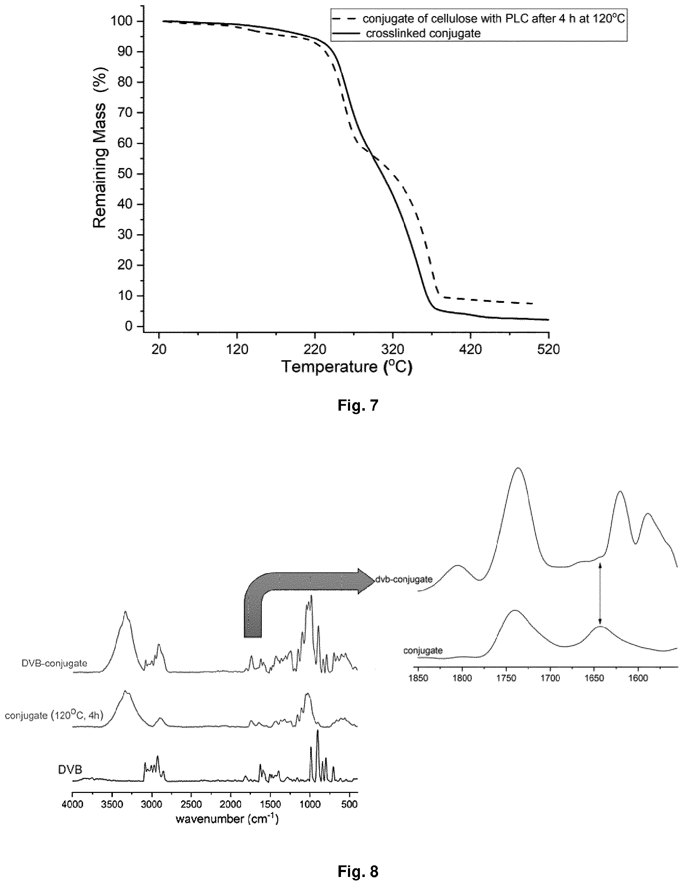

Fig. 7: TGA analysis of the crosslinked PLC-modified cellulose.
Fig. 8: IR analysis of the of the PLC functionalized cellulose with DVB.

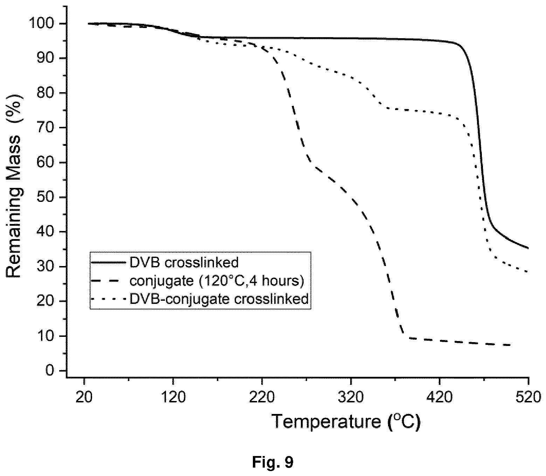

Fig. 9: TGA analysis of the of the PLC functionalized cellulose with DVB and comparison with DVB-crosslinked and precursor conjugate.

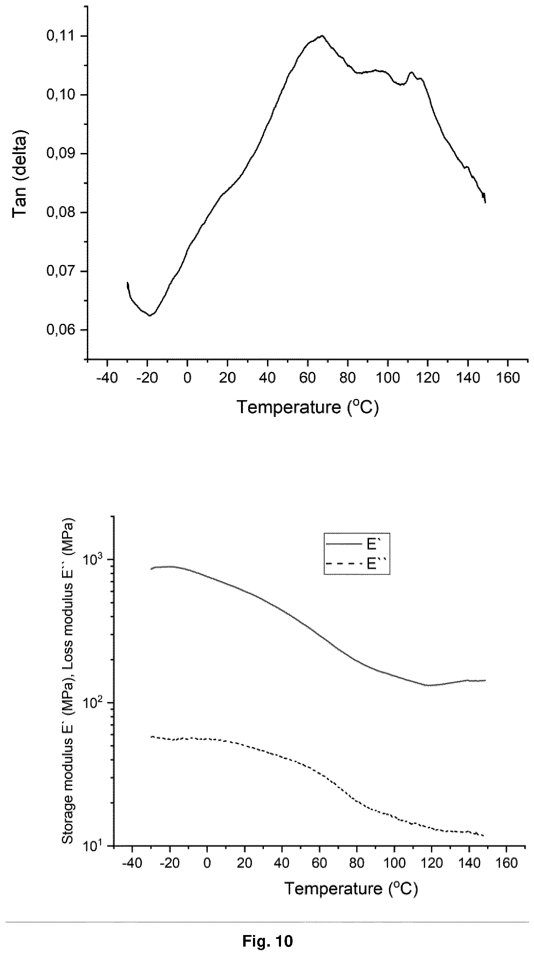

Fig. 10: Dynamic Mechanical Analysis (DMA) of the PLC functionalized cellulose with DVB (Tanδ vs temperature and E' and E"vs temperature).

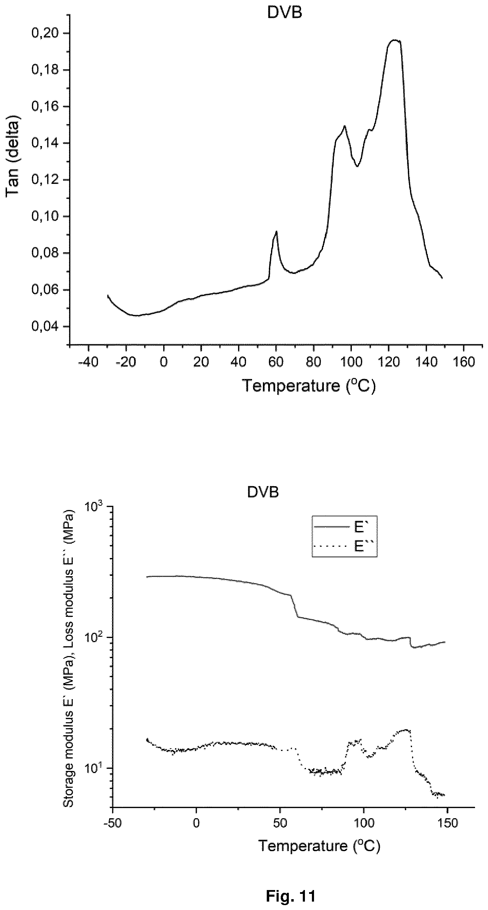

Fig. 11: DMA analysis of the DVB crosslinked without the PLC functionalized cellulose (Tanδ vs temperature and E' and E"vs temperature).

### Examples

The following are some illustrative examples of the invention that have been carried out by the inventors.

### Materials

Microcrystalline cellulose was obtained from ServaTetrahydrofuran (THF), dimethyl sulfoxide (DMSO), 2,2'-azobis(isobutyronitrile) (AIBN), methanol, ethane-1,2-dithiol, 1,5,7-triazabicyclo[4.4.0]dec-5-ene (TBD) and divinylbenzene (DVB) were purchased from Merck. Phenylbis(2,4,6-trimethylbenzoyl) phosphineoxide (BAPO) was purchased from TCI. PLC was prepared according to the literature guidelines (Lamparelli, D. H et al. Angew. Chem. Int. Ed. 2023, 62, e202314659). PLC was prepared as indicated below:
Commercial limonene oxide (Sigma Aldrich) was filtered over SiO₂ and distilled before using it. Limonene oxide (5.00 mL, 29.6 mmol, 1.0 equiv; cis/trans ratio is 44:56), Aluminum(III) aminotriphenolate complex (prepared accordingly to the procedure reported in Whiteoak et al J.Am.Chem.Soc. 2013, 135, 1228-1231) (161.0 mg, 296 µmol, 0.01 equiv; ), PPNCI (87.6 mg, 148 µmol, 0.005 equiv) and toluene (0.60 mL) from a SPS system were mixed in a Teflon vessel equipped with a cross-shaped magnetic stirring bar, placed in a stainless-steel reactor (40 mL reactor) and purged with 5 bar of CO₂ three times. Finally, the pressure was stabilized at 15 bar of CO₂ at room temperature. After placing the reactor in a metal heating block, the reactor was heated to an inside temperature of 45 °C (55 °C outside temperature) for 72 h at 600 rpm. The reaction was stopped by cooling down the reactor in an ice bath and subsequently careful depressurization was applied. The crude reaction mixture was added dropwise to a solution of HCl (1 M) in methanol which caused PLC to precipitate as a white solid. The precipitate was filtered, washed two times with 30 mL of cold methanol, and dried in vacuo. PLC: 3.22 g (16.39 mmol, 55% yield), Mn = 5.7 Kg/mol, Ð = 1.4.

### Example 1: Procedure for the functionalization of cellulose with PLC

In a round bottom flask equipped with a magnetic Teflon stirring bar, 10 g of PLC, 1.1 g of microcrystalline cellulose (acquired by Serva, Germany.CAS number: 9004-34-6) and 0.22 g of TBD were weighed. Then, 10 ml of DMSO were added and the flask was transferred inside an oil bath. The temperature was set up at 120 °C and the dispersion was left under vigorous stirring. After 4 h of reaction, the content of the flask was mixed with an excess of methanol followed by centrifugation in order to obtain the precipitated solids. The supernatant liquid was decanted, and the solids were dried in a vacuum oven at 50 °C for 3 h. Subsequently, the solids were mixed with 20 ml of THF in order to solubilize the unreacted PLC and then the mixture was centrifuged in order to obtain the solids. The last two steps (mixing with THF and centrifugation) were repeated in thrice. The final product (1.5 g) was dried in vacuum oven at 120 °C for 12 h. This final product is the PLC-functionalized cellulose (the conjugate having 25 wt% PLC).

The reaction was also carried out at other temperatures and times, as indicated in Table 1 (see results and discussion).

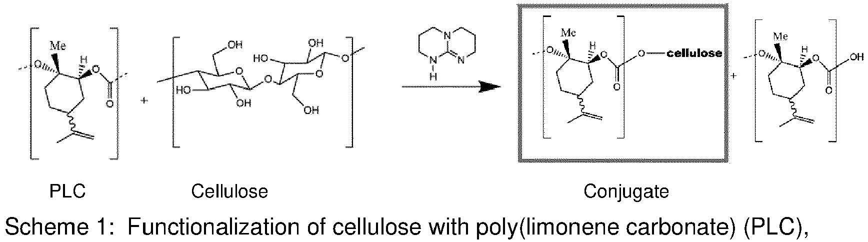

### Example 2: Procedure for the Crosslinking Process of the PLC-modified cellulose through Thiol-Ene Click Chemistry

0.011 g of the radical initiator AIBN and 1 g of the corresponding conjugate obtained in example 1 (25 wt%PLC) were transferred into a vial equipped with a Teflon stirring bar. Then, the solvent (THF, 3.0 mL) and 0.0153 g of 1,2-ethanedithiol were added. The reaction mixture was heated in an oil bath at 70 °C, and after 12 h the volatiles were removed in vacuo. Afterwards, the crude reaction mixture was washed three times with methanol. Finally, the final product (0.8 g) was dried in a vacuum oven.

### Example 3: Procedure for the preparation of composite material of the PLC functionalized cellulose with DVB

0.8 g of DVB and 0.2 g of the conjugate obtained in example 1 were weighed in a vial. 0.01 g of BAPO was added to the same vial. After vigorous stirring, the content of the vial was transferred in a Teflon based mould. Then, a 405 nm lamp was used to apply light over the mould. After 20 minutes, the final composite material was prepared.

### Results and Discussion

### Functionalization of PLC with cellulose carried out in example 1

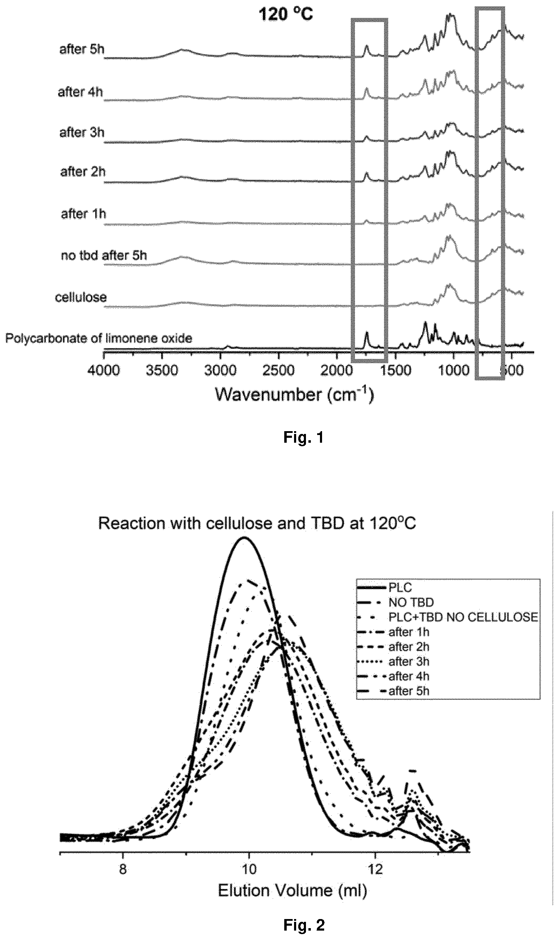

In order to test its performance as catalyst for this reaction, a control experiment involving PLC and cellulose was conducted without TBD for 5 hours. IR analysis of the product, after careful removal of the free unattached PLC using THF, revealed that it is pure cellulose. However, when TBD was employed, the reaction was successful already after 1 hour of reaction. The formation of a cellulose-PLC conjugate was confirmed by IR analysis (see the characteristic vibration bands marked in orange in Figure 1). The best results in terms of the highest percentage of cellulose functionalization with PLC were achieved at 120 °C after 4 hours of reaction (Table 1).

**Table 1: Composition [wt(%)PLC] of PLC-cellulose conjugates prepared at different temperatures and timepoints**

| Reaction time | **60°C** | **80°C** | **100°C** | **120°C** | **150°C** |
|---|---|---|---|---|---|
| 1h | 0% | 0% | 9.3% | 16.2% | 8% |
| 2h | 0% | 0% | 10.2% | 17.2% | 0% |
| 3h | 0% | 8.4% | 10% | 18.3% | 0% |
| 4h | 0% | 9.4% | 13.1% | 25% | 0% |
| 5h | 0% | 11.8% | 13.8% | 23.1% | 0% |

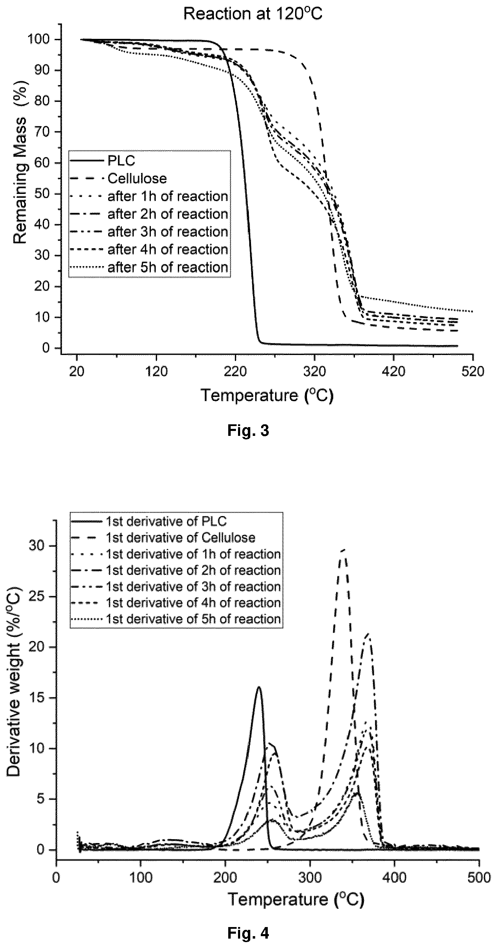

Cellulose avails a number of hydroxyl groups that can react with the -O(C=O)O- of PLC catalysed by TBD. In this respect, the functionalization of cellulose with PLC is based on the covalent binding of PLC to cellulose. The reaction of cellulose with PLC leads to a fragmentation of PLC (see Scheme 1), which is a side reaction that PLC undergoes fragmentation on itself. For that reason, after the purification of the prepared conjugates by centrifugation, the liquid parts were analysed with gel permeation chromatography (GPC) (Figure 2). The GPC analysis points out that fragmentation of PLC is much more evident in the presence of cellulose. Thermogravimetric (TGA) analysis (Figure 3) was employed in order to find the amount of PLC attached to cellulose. Based on this set of data, the first derivative was computed and the analysis of the results shows the percentage of PLC attached to the cellulose as presented in Table 1. The results suggest that the reaction is time and temperature dependant. At 60 °C, no reaction occurs, while the fragmentation of PLC is very fast at 150 °C. A temperature range between 80 °C and 120 °C is appropriate for cellulose modification with PLC.

### Crosslinking of the PLC-modified cellulose through Thiol-Ene Click Chemistry carried out in example 2

Having prepared conjugates of cellulose containing up to 25 wt% PLC, our effort directed to the crosslinking of the double bond of the PLC. The distribution of the PLC in the conjugate can contribute to the creation of a crosslinked network and the improvement of the properties of the final material. For that reason, the utilization of an appropriate crosslinker would assist. The conjugate with 25 wt%PLC, which was prepared after 4 hours of reaction at 120 °C, was used for the thiol-ene modification. An equivalent of 0.5 of dithiol was used so that all the double bonds can completely react. The final material was swollen after the completion of the reaction producing a rubber like material with evident viscoelastic properties, which was tested "as it is" to shed light to its rheological behaviour. The rheological measurement depicts a linear viscoelasticity regime as the storage modulus remains higher that the loss modulus. This indicates that it remains more elastic than viscous independently of the strain increase, underlining the difference of the properties in comparison with the powder like precursor. After the purification with methanol and drying in a vacuum oven overnight, the obtained solid could not be solubilized in any solvent. For the confirmation of the successful thiol-ene reaction, IR spectroscopy was employed. The peak at 1645 cm⁻¹, which belongs to the double bond of the attached PLC of the conjugate, completely disappeared after the crosslinking, proving the full reaction of the olefin groups. In the same time the peaks belonging to the cellulose can be seen clearly, showing that during the crosslinking reaction cellulose remains intact. The burning profile of the material was tested with TGA.

### Composite materials of the PLC functionalized cellulose with DVB obtained in example 3

Another example of the crosslinking potential of the prepared PLC functionalized cellulose is their integration into different types of matrices for their reinforcement. For that reason, DVB was one excellent candidate, since it can be used for dispersing, homogenizing and crosslinking of the purified conjugates. The selection of DVB excludes the demand for any organic solvent, since it can reciprocate to the role of the dispersion medium due to its liquid state of matter. In parallel, it can distribute the conjugates evenly, while its double bonds can be used for further crosslinking with the pendent olefin groups of the attached PLC in the cellulose. In order to facilitate the crosslinking process, the photo-crosslinking method was preferred due to the fast curing process and the possibility to use moulds, offering a shape to the formatted final composite materials. BAPO, as photo-initiator, and a 405 nm lamp were engaged for the photocuring process. The mass ratio between DVB/conjugate was kept always at 80/20, while only 1% w/w of BAPO was used.

The IR analysis reveals the successful reaction between DVB and its precursor. In a different line of experiments, DVB was also crosslinked without the presence of the conjugates, so that to produce crosslinked DVB. This was used as a reference material for comparison of the thermal and mechanical properties of the presented DVB-conjugate. The same protocol was followed, with the exclusion of the participation of the conjugate in the preparation mixture. The DVB-conjugate crosslinked composite material and its corresponding DVB crosslinked reference example were tested separately with TGA, to provide data that show their different burning profiles. In the same time, the composite structure showed different thermal properties in comparison with the precursor conjugate, underlining their composition differences. Also, the Dynamic Mechanical Analysis (DMA) analysis provides evidence for the alteration of the thermal properties by the inclusion of the conjugates in the DVB matrix, since transitions in the complex modulus occurred at different temperatures. The most significant differences are observed in the viscoelastic properties and especially in the shear storage modulus which shows higher values during the whole temperature range in comparison with the DVB crosslinked, emphasizing that the obtained composite becomes stiffer by the integration of the PLC functionalized cellulose in its structure. No apparent different is observed in the Loss modulus. The same tendency was noticed also for the bending test, where the DVB-conjugate showed higher bending modulus with higher values of stress at break in comparison with the DVB-crosslinked without conjugates. The combination of the analysis of the data show that the incorporation of the PLC functionalized cellulose in a matrix like DVB can improve the original thermomechanical properties of the matrix material, especially in terms of its rigidness, meaning that the shape of the final composite material is harder to bent or change. This would further contribute in the construction of composites, whose properties based on matrix can be further modified, leading to new materials with an increment of their elastic characteristics, targeting applications where instant hardening of a liquid like material to a new composite material with better energy storage features are required. In this context, the presented composite material could serve as a sealant for corresponding fastening applications.

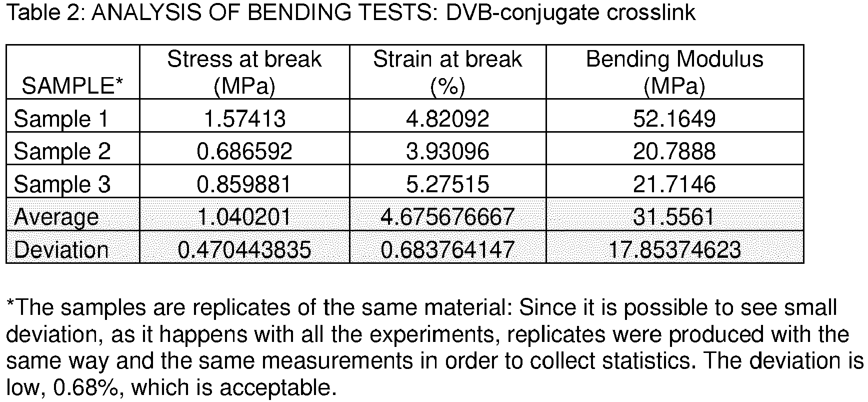

### COMPARISON OF RESULTS FROM BENDING ANALYSIS: DVB & DVB-CONJUGATE

### TESTING PROCEDURES:

The determination of the bending analysis of the samples DVB and DVB conjugate have been done according to the following procedure: a rectangular sample of the material tested was place in the DMA apparatus (testing in static mode, rate control strain ramp) at room temperature and tested in 3-point bending. An increasing centred force was applied with a strain rate of 0.1 mm/min. The Force and displacement were registered, and the corresponding stress and strain values were calculated using classical Euler-Bernoulli Beam Theory and, thus, the Bending Modulus.

### CONDITIONS:

Dynamic Mechanical Analyser DMAQ850 from TA Instrument.
Static mode, rate control strain ramp
Mode of Deformation: 3-point bending
Span: 10 mm
Static Force 0.01 N
Temperature: 28 ºC.
Clamp/Mode deformation: 3-point bending low friction.

### RESULTS:

### MATERIAL: Conjugate-DVB

**Table 3: ANALYSIS OF BENDING TESTS: CONJUGATE-DVB**

| SAMPLE* | Stress at break (MPa) | Strain at break (%) | Bending Modulus (MPa) |
|---|---|---|---|
| Sample 1 | 1.57 | 4.82 | 52.16 |
| Sample 2 | 0.67 | 3.93 | 20.79 |
| Sample 3 | 0.86 | 5.27 | 21.71 |
| Average | 1.04 | 4.67 | 31.56 |
| Deviation | 0.47 | 0.68 | 17.85 |

| | | | |
|---|---|---|---|
| *The samples are replicates of the same material: Since it is possible to see small deviation, as it happens with all the experiments, replicates were produced with the same way and the same measurements in order to collect statistics. The deviation is low, 0.68%, which is acceptable. | | | |

### MATERIAL: DVB only

**Table 4: ANALYSIS OF BENDING TESTS: DVB only**

| SAMPLE* | stress at break (MPa) | strain at break (%) | Bending Modulus (MPa) |
|---|---|---|---|
| Sample A | 0.22 | 5.77 | 4.58 |
| Sample B | 0.73 | 5.53 | 12.82 |
| Average | 0.47 | 5.65 | 8.70 |
| Deviation | 0.36 | 0.17 | 5.83 |

| | | | |
|---|---|---|---|
| *The samples are replicates of the same material: Since it is possible to see small deviation, as it happens with all the experiments, replicates were produced with the same way and the same measurements in order to collect statistics. The deviation is low, 0.68%, which is acceptable. | | | |

### ANALYSIS AND COMPARISON OF BOTH SAMPLES IN BENDING

In Table 3 and 4, the stress at break, the strain at break, and the Bending Modulus (comparable to Young Modulus) are presented. Comparing these values, it can be appreciated that sample DVB-Conjugate present higher strength (more than double, 1.04 MPa for DVB-Conjugate in front of 0.48 MPa of DVB), similar ductility (4.68% for DVB-Conjugate in front of 5.66% of DVB) and is much stiffer, with a Bending Modulus of 31.6 MPa in DVB-Conjugate in front of 8.7 MPa in DVB (more than 3.6 times higher).

It is important to empathize that both materials are in glassy state at testing temperature (28ºC) according to the DMA analysis, so the results are clearly comparable.

### COMPARISON OF RESULTS FROM DMA ANALYSIS: DVB & DVB-CONJUGATE

### TESTING PROCEDURES:

The determination of the dynamic mechanical properties of the different samples supplied have been done according to the following standards:
ISO 6721-1:2011 "Plastics -- Determination of dynamic mechanical properties -- Part 1: General principles".
ISO 6721-4:2019 "Plastics - Determination of dynamic mechanical properties - Part 4: Tensile vibration - Non-resonance method"
Plastics - Determination of dynamic mechanical properties - Part 4: Tensile vibration - Non-resonance method.
ISO 6721-11: 2012 "Plastics -- Determination of dynamic mechanical propertiesPart 11: Glass transition temperature".

The first standard specifies methods for determining the dynamic mechanical properties of rigid plastics within the region of linear viscoelastic behavior. The second one is the description of the specific test method for the tensile test. The last part of the ISO 6721 (part 11) specifies methods for determining a value of the glass transition temperature (T_{g}) from the dynamic mechanical properties measured during a linear temperature scan under heating conditions.

According to these standards, a tensile vibration method will be used to determine the components of Young's complex modulus (storage modulus, loss modulus, and tan delta) of the sample at a specific frequency as a function of temperature. From these data, a value for the glass transition will be determined.

### CONDITIONS:

### Dynamic Mechanical Analyser DMAQ850 from TA Instrument.

Mode of Deformation: tensile
Frequency 1 Hz.
Oscillation strain imposed 0.0075% (calculated to be within the linear viscoelastic range).
Static Force: 0.01 N
Heating/cooling rate: 2 ºC/min.
Temperature Range: -50ºC to 120/150ºC.
Clamp/Mode deformation: dual screw film clamp.

### ANALYSIS AND COMPARISON OF BOTH SAMPLES IN BENDING

Tables 5 and 6 present the temperatures at the different Peaks of tand and the Storage Modulus at different temperatures (-30ºC or glassy state; 30ºC or at Room temperature and 120ºC or rubbery state). According to ISO 6721-11:2012, different characteristic temperatures can be obtained from these results. However, the most straightforward and convenient definition of Tg is the temperature of the peak maxima in the tand curve, as this is a unique and unambiguous point.

| Table 5: ANALYSIS OF DMA TESTS: CONJUGATE-DVB | | | | | |
|---|---|---|---|---|---|
| T₁ₛₜ₋ₚₑₐₖ | T_{2nd-peak} | T_{3rd-peak} | E'_{glassy (-30ºC)} | E'_{Tamb (30ºC)} | E'_{rubbery (120ºC)} |
| [ºC] | [ºC] | [ºC] | [MPa] | [MPa] | [MPa] |
| 67.2 | 94.08 | 111.87 | 855.93 | 521.75 | 132.58 |

| Table 6: ANALYSIS OF DMA TESTS: DVB only | | | | | |
|---|---|---|---|---|---|
| T₁ₛₜ₋ₚₑₐₖ | T_{2nd-peak} | T_{3rd-peak} | E'_{glassy (-30ºC)} | E'_{Tamb (30ºC)} | E'_{rubbery (120ºC)} |
| [ºC] | [ºC] | [ºC] | [MPa] | [MPa] | [MPa] |
| 60.16 | 96.38 | 122.54 | 289.40 | 263.26 | 95.97 |

Comparing the tand evolution with the temperature of sample DVB-conjugate and DVB only, it can be appreciated that sample DVB-conjugate presents only one transition with one clear peak at 67.2°C and two small post-transitions at 94.1ºC and 111.9 ºC. According to this, the peak at 67.2ºC can be identified as the Tg of the material. Contrarily, sample DVB presents two main peaks at 96.4ºC and 122.5ºC with a small pre-transition at 60.2ºC. In this sample, the Tg can be identified as the peak at 122.5ºC.

Concerning the height of the tand peak or the ability to dissipate energy (damping ability) in the transition process from glassy to rubbery state, it is more than double in DVB than DVB-conjugate (0.196 in DVB in front of 0.109 in DVB-conjugate), meaning that the internal network structure of DVB presents more mobility in its transition comparing to DVB-conjugate.

Looking at the values of Storage Modulus, E', (similar but not the same as the Young modulus computed from a static test in bending or tensile) at room temperature (30ºC), sample DVB-conjugate again is much stiffer than DVB (with a value of 521.75 MPa in front of 263.26 MPa). The same can be observed at the glassy state (-30º) with a value of 855.93 MPa in front of 289.4 MPa, and at the rubbery state (120ºC) with 132.58 MPa for DVB-conjugate and 95.97 MPa for DVB.

*This project has received funding from the European Union's Horizon 2020 research and innovation programme under Marie Sk* 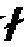 *odowska-Curie grant agreement No. 801342 (Tecniospring INDUSTRY) and the Government of Catalonia's Agency for Business Competitiveness (ACCIÓ).*

## Claims

1. A procedure for the functionalization of cellulose with poly(limonene carbonate) (PLC), wherein the method comprises contacting cellulose with PLC in a solvent in presence of the catalyst 1,5,7-Triazabicyclo[4.4.0]dec-5-ene (TBD) at a temperature between 80 and 120ºC, thus obtaining PLC-functionalized cellulose.

2. Procedure, according to claim 1, wherein the solvent used is dimethyl sulfoxide (DMSO).

3. Procedure, according to claim 1 or 2, wherein the temperature is 120 ºC.

4. Procedure, according to any of the previous claims, wherein said procedure is carried out for 3 to 5 hours.

5. Procedure, according to any of the previous claims, wherein the proportion by weight the proportion by weight PLC:cellulose is between 10:0.5 and 10:1.5.

6. Procedure, according to any of the previous claims, wherein the cellulose is microcrystalline cellulose.

7. Material obtainable by the procedure described in any of claims 1 to 6 comprising or consisting of PLC-functionalized cellulose.

8. A crosslinking process comprising contacting the PLC-functionalized cellulose obtainable by the procedure described in any of claims 1 to 6 with ethane-1,2-dithiol as a crosslinker in presence of a radical initiator, and at a temperature between 60 and 90ºC.

9. The crosslinking process, according to claim 8, wherein the radical initiator is 2,2'-azobis(isobutyronitrile) (AIBN).

10. The crosslinking process, according to claim 8 or 9, wherein the solvent tetrahydrofuran (THF) is used.

11. The crosslinked material obtainable by the process described in any of claims 8 to 10 comprising or consisting of the PLC- functionalized cellulose crosslinked with ethane-1,2-dithiol.

12. A method to obtain a divinylbenzene (DVB) based composite material, said method comprises: contacting the PLC-functionalized cellulose obtainable by the procedure described in any of claims 1 to 6 with DVB in presence of phenylbis(2,4,6-trimethylbenzoyl) phosphineoxide (BAPO) and under light radiation between 365 and 460 nm.

13. The method according to claim 12, wherein the mass ratio between DVB/ PLC-functionalized cellulose is 80/20, and/or the amount of BAPO used is between 0.5 and 1.5 weight %, with respect to the total weight of the mixture DVB/ PLC-functionalized cellulose.

14. Composite material obtainable by the process described in any of claims 12 or 13.

15. Use of the composite material described in claim 14 as a sealant.
